(19) Europäisches Patentamt
European Patent Office
Office européen des brevets

(11) **EP 4 756 842 A1**

(12) **EUROPEAN PATENT APPLICATION**
published in accordance with Art. 153(4) EPC

(43) Date of publication:
**10.06.2026 Bulletin 2026/24**

(21) Application number: **24851891.2**

(22) Date of filing: **07.08.2024**

(51) International Patent Classification (IPC):
*H01B 1/06* (2006.01)    *C01G 25/00* (2006.01)
*H01G 11/56* (2013.01)    *H01M 10/052* (2010.01)
*H01M 10/0562* (2010.01)

(52) Cooperative Patent Classification (CPC):
**C01G 25/00; H01B 1/06; H01G 11/56;**
**H01M 10/052; H01M 10/0562;** Y02E 60/10

(86) International application number:
**PCT/JP2024/028300**

(87) International publication number:
**WO 2025/033470 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023  JP 2023131237**

(71) Applicants:
• **SUMITOMO CHEMICAL COMPANY, LIMITED**
**Tokyo 103-6020 (JP)**

• **Kyoto University**
**Kyoto-shi, Kyoto 606-8501 (JP)**

(72) Inventors:
• **DOI Atsunori**
**Niihama-shi, Ehime 792-8521 (JP)**
• **KAGEYAMA Hiroshi**
**Kyoto-shi, Kyoto 606-8501 (JP)**

(74) Representative: **Vossius & Partner**
**Patentanwälte Rechtsanwälte mbB**
**Siebertstraße 3**
**81675 München (DE)**

(54) **ION CONDUCTIVE SUBSTANCE, SOLID ELECTROLYTE, AND BATTERY**

(57)    One aspect of the present disclosure provides an ion conductive substance containing an alkali metal element, a divalent metal element D, a trivalent or higher valent metal element M, and a halogen element, having a cubic crystal structure, wherein in an X-ray diffraction chart obtained by measurement using a CuKα ray at 25°C, when a diffraction peak having a largest peak height observed in a range where a 2θ angle is 45 to 53° is defined as a diffraction peak B, and a diffraction peak having a largest peak height observed in a range where a 2θ angle is 33 to 38° is defined as a diffraction peak A, a ratio of a peak height of the diffraction peak A to a peak height of the diffraction peak B is 0.80 to 2.50.

*Fig.1*

**Description**

**Technical Field**

The present disclosure relates to an ion conductive substance, a solid electrolyte, and a battery.

**Background Art**

In recent years, solid electrolytes have attracted attention as electrolytes used in electrochemical devices such as lithium ion batteries (Patent Literatures 1 to 4). Since the solid electrolytes are excellent in high-temperature durability, high voltage resistance, and the like as compared to conventional electrolytic solutions, it is considered that the solid electrolytes are useful for improving battery performance such as safety, high capacity, rapid charging and discharging, and pack energy density.

As described in Patent Literatures 1 to 4, halide solid electrolytes containing lithium and a metal element other than lithium (lithium-based halide solid electrolytes) are known as materials used for solid electrolytes of lithium ion batteries. The halide solid electrolytes have advantages not found in oxide-based or sulfide-based solid electrolytes, such as not requiring sintering because of high flexibility and having high safety because of not releasing harmful $H_2S$. In addition to lithium ion batteries, research is also proceeding on halide solid electrolytes using other alkali ions such as sodium and potassium, which have larger abundances than lithium.

**Citation List**

**Patent Literature**

[Patent Literature 1] WO 2020/070957 A
[Patent Literature 2] WO 2021/024876 A
[Patent Literature 3] WO 2021/024785 A
[Patent Literature 4] WO 2021/024783 A

**Summary of Invention**

**Technical Problem**

However, the halide solid electrolytes have room for improvement in stability at a low potential, that is, resistance to a reduction reaction.

The present disclosure has been made in view of the above circumstances, and an object thereof is to provide an ion conductive substance having improved reduction resistance. Another object of the present disclosure is to provide a solid electrolyte and a battery containing the ion conductive substance.

**Solution to Problem**

The present disclosure includes the following exemplary embodiments.

[1] An ion conductive substance containing an alkali metal element, a divalent metal element D, a trivalent or higher valent metal element M, and a halogen element, having a cubic crystal structure, wherein in an X-ray diffraction chart obtained by measurement using a $CuK\alpha$ ray at 25°C, when a diffraction peak having a largest peak height observed in a range where a 2θ angle is 45 to 53° is defined as a diffraction peak B, and a diffraction peak having a largest peak height observed in a range where a 2θ angle is 33 to 38° is defined as a diffraction peak A, a ratio of a peak height of the diffraction peak A to a peak height of the diffraction peak B is 0.80 to 2.50.

[2] The ion conductive substance according to [1], wherein the halogen element contains Cl.

[3] The ion conductive substance according to [1] or [2], wherein the halogen element further contains at least one element selected from the group consisting of F, Br, I, and O.

[4] The ion conductive substance according to any one of [1] to [3], wherein the divalent metal element D contains at least one selected from the group consisting of Mg, Ca, Sr, and Ba.

[5] The ion conductive substance according to any one of [1] to [4], wherein the metal element M contains at least one selected from the group consisting of Zr, Nb, In, Bi, and Hf.

[6] The ion conductive substance according to any one of [1] to [5], wherein a content of the alkali metal element is 5 to 30 mol%, a content of the metal element D is 1 to 16 mol%, a content of the metal element M is 1 to 18 mol%, and a content of the halogen element is 55 to 78 mol%.

[7] The ion conductive substance according to any one of [1] to [6], wherein the alkali metal element contains Li, and the ion conductive substance has at least one peak having a peak top in a range of -50 to 0.68 ppm with a chemical shift of a $^6$LiCl salt defined as 0 ppm when a solid $^6$Li-NMR spectrum is measured at room temperature under a condition of a magic angle spinning of 10 kHz with a resonance frequency of a $^6$Li nucleus being 44.1 MHz.

[8] A solid electrolyte containing the ion conductive substance according to any one of [1] to [7].

[9] A battery containing the solid electrolyte according to [8].

## Advantageous Effects of Invention

According to the present disclosure, it is possible to provide an ion conductive substance having improved reduction resistance. Further, according to the present disclosure, it is also possible to provide a solid electrolyte and a battery containing the ion conductive substance.

## Brief Description of Drawings

[FIG. 1] FIG. 1 is an X-ray diffraction chart for each ion conductive substance of Examples 1 to 11 and Comparative Examples 1 and 2.

[FIG. 2] FIG. 2 is a diagram illustrating measurement results of cyclic voltammetry for each ion conductive substance of Examples 1 to 4 and Comparative Examples 1 and 2.

[FIG. 3] FIG. 3 is a solid $^6$Li-NMR spectrum for each ion conductive substance of Example 1, Example 11, and Comparative Example 1.

[FIG. 4] FIG. 4 is a diagram illustrating Arrhenius plots measured for the ion conductive substances of Examples 1 and 2.

[FIG. 5] FIG. 5 is a diagram illustrating results of a charge/discharge test of a secondary battery of Example 1.

[FIG. 6] FIG. 6 is a diagram illustrating results of a charge/discharge test of a secondary battery of Comparative Example 1.

[FIG. 7] FIG. 7 is a diagram illustrating results of a cycle test for each of the secondary batteries of Example 1 and Comparative Example 1.

## Description of Embodiments

An ion conductive substance according to an embodiment of the present disclosure contains an alkali metal element, a divalent metal element D, a trivalent or higher valent metal element M, and a halogen element. The ion conductive substance according to the present embodiment may be a single compound. The ion conductive substance may contain an alkali metal-containing halide.

The ion conductive substance has a cubic crystal structure. Note that the crystal structure can be identified by X-ray diffraction measurement. In particular, it can be identified by Rietveld analysis.

In the ion conductive substance, in an X-ray diffraction chart obtained by measurement using a CuKα ray at 25°C, when a diffraction peak having a largest peak height observed in a range where a 2θ angle is 45 to 53° is defined as a diffraction peak B, and a diffraction peak having a largest peak height observed in a range where a 2θ angle is 33 to 38° is defined as a diffraction peak A, a ratio of a peak height of the diffraction peak A to a peak height of the diffraction peak B is 0.80 to 2.50.

Regarding the ion conductive substance according to the present embodiment, when a peak height of the diffraction peak B having the largest peak height observed in the range where the 2θ angle is 45 to 53° in the X-ray diffraction chart obtained by measurement using a CuKα ray at 25°C is defined as B, and a peak height of the diffraction peak A having the largest peak height observed in the range where the 2θ angle is 33 to 38° is defined as A, A/B is 0.80 to 2.50. Note that the diffraction peak A is a diffraction peak having a peak position in a range of 33 to 38°, and the diffraction peak B is a diffraction peak having a peak position in a range of 45 to 53°, both of which are peaks corresponding to a cubic crystal. In the case of a cubic crystal, an alkali metal element (for example, Li) is present in three-dimensional directions. Therefore, diffusion paths of alkali metal ions increase, and ionic conductivity increases.

The ratio of the heights of the diffraction peaks described above (value of A/B) is related to crystallinity of the cubic structure. It is considered that when the ratio is within the above range, a cubic structure with high crystallinity and stability is formed. It is considered that due to the high crystallinity in the ion conductive substance of the present embodiment, reduction resistance, which is an effect, tends to improve.

The ratio of the heights of the diffraction peaks (value of A/B) may be, for example, 0.85 to 2.40, 0.90 to 2.30, or 0.95 to 2.20.

When crystallinity of a target crystal is high and uniformity is high, the diffraction peak becomes a sharper peak with a smaller half width. On the other hand, the half width of the diffraction peak becomes large due to introduction of defects or strains into the target crystal. In the ion conductive substance according to the present embodiment, the half width of the diffraction peak A may be, for example, 0.1 to 3°, 0.3 to 2°, or 0.5 to 1.5° from a viewpoint of achieving both reduction resistance and ionic conductivity at a higher level. Here, the half width in the present specification is a full width at half maximum (FWHM) unless otherwise specified.

In the ion conductive substance according to the present embodiment, the half width of the diffraction peak B may be, for example, 0.1 to 3°, 0.3 to 2°, or 0.5 to 1.5° from the viewpoint of achieving both reduction resistance and ionic conductivity at a higher level.

The ion conductive substance of the present embodiment has a cubic crystal structure. A lattice constant of the ion conductive substance may be, for example, 10.1 to 10.6 Å, 10.2 to 10.5 Å, or 10.25 to 10.47 Å.

The alkali metal element may be any of Li, Na, K, Rb, and Cs, but may contain at least one kind of Li, Na, and K, may contain at least one of Li and Na, may contain Li, and may be Li.

In the ion conductive substance of the present embodiment, the alkali metal element may be of one kind, or may be of two or more kinds. When the alkali metal element contains two or more kinds of alkali metal elements, a proportion of one kind of alkali metal element among the alkali metal elements contained in the ion conductive substance may be 80 mol% or more, may be 90 mol% or more, and may be 95 mol% or more. The one kind of alkali metal element (that is, the alkali metal element having the largest content ratio on a molar basis among the alkali metal elements contained in the ion conductive substance) may be any of Li, Na, and K, may be any of Li and Na, and may be Li.

The content of the alkali metal element in the ion conductive substance may be, for example, 3 to 33 mol%, 5 to 30 mol%, 10 to 40 mol%, 15 to 30 mol%, or 20 to 30 mol% with respect to a total amount of atoms contained in the ion conductive substance.

The metal element D is a divalent metal element, and examples thereof include alkaline earth metals, Zn, and the like. The ion conductive substance may contain one kind or two or more kinds of elements as the metal element D. The metal element D may contain at least one element selected from Mg, Ca, Sr, and Ba, may contain at least one element selected from Mg, Sr, and Ba, and may contain Mg.

The content of the divalent metal element D in the ion conductive substance may be, for example, 0.5 to 20 mol%, 1 to 18 mol%, 1.5 to 16 mol%, 1 to 16 mol%, or 2 to 14 mol% with respect to the total amount of atoms contained in the ion conductive substance.

The metal element M is a metal element having a valence of 3 or more, may contain a trivalent to hexavalent metal element, and may contain a trivalent to pentavalent metal element. The metal element M may contain one kind or two or more kinds of metal elements.

The trivalent metal element may contain at least one selected from the group consisting of Sc, Y, La, Ce, Pr, Nd, Pm, Sm, Eu, Gd, Tb, Dy, Ho, Er, Yb, Lu, Al, Ga, In, Sb, and Bi, and may contain at least one of In and Bi.

The tetravalent metal element may contain at least one metal element selected from the group consisting of Ti, Zr, and Hf, and may contain Zr.

The pentavalent metal element may contain at least one of Nb and Ta, and may contain Ta.

Examples of the hexavalent metal element include W.

The metal element M may contain at least one selected from the group consisting of Y, Zr, Nb, In, W, Hf, and Bi, may contain at least one selected from the group consisting of Zr, Nb, In, Hf, and Bi, may contain at least one selected from the group consisting of Zr, Nb, In, and Hf, may contain at least one metal element selected from the group consisting of Zr, Nb, and In, and may contain Zr. When the metal element M contains two or more kinds of metal elements, the metal element M may contain, for example, Zr and at least one selected from the group consisting of Y, Nb, In, W, Hf, and Bi, may contain Zr and at least one selected from the group consisting of Nb, In, Hf, and Bi, and may contain Zr and at least one selected from the group consisting of Nb, In, and Bi.

The content of the metal element M in the ion conductive substance may be, for example, 0.5 to 25 mol%, 1 to 20 mol%, 1 to 18 mol%, or 2 to 17 mol% with respect to the total amount of atoms contained in the ion conductive substance.

When the metal element M contained in the ion conductive substance contains two or more kinds of metal elements, a content of a metal element having a largest content among the metal elements M may be, for example, 60 mol% or more, 70 mol% or more, 80 mol% or more, 85 mol% or more, or 90 mol% or more with respect to a total amount of the metal element M. The content of the metal element having the largest content among the metal elements M contained in the ion conductive substance may be 60 to 99.9 mol%, 70 to 99 mol%, 80 to 98 mol%, 85 to 97 mol%, or 85 to 95 mol% with respect to the total amount of the metal element M. A content of a metal element other than the metal element having the largest content among the metal elements M may be, for example, 30 mol% or less, 20 mol% or less, or 15 mol% or less with respect to the total amount of the metal element M.

Note that the "metal element having the largest content" means a metal element having the largest content on a molar basis among the metal elements M. The metal element having the largest content may be, for example, Zr, Nb, In, Hf, or Bi, may be Zr, Nb, or In, and may be Zr.

When the metal element M contained in the ion conductive substance contains two or more kinds of metal elements, the content of the metal element other than the metal element having the largest content among the metal elements M may be, for example, 0.5 to 30 mol%, 1 to 20 mol%, or 5 to 15 mol% with respect to the total amount of the metal element M.

Among the metal elements M contained in the ion conductive substance, a content of Zr may be, for example, 60 mol% or more, 70 mol% or more, 80 mol% or more, 85 mol% or more, or 90 mol% or more with respect to the total amount of the metal element M. Among the metal elements M contained in the ion conductive substance, the content of Zr may be, for example, 60 to 99.9 mol%, 70 to 99 mol%, 80 to 98 mol%, 85 to 97 mol%, or 85 to 95 mol% with respect to the total amount of the metal element M.

Among the metal elements M contained in the ion conductive substance, a content of a metal element other than Zr may be, for example, 30 mol% or less, 20 mol% or less, or 15 mol% or less with respect to the total amount of the metal element M. Among the metal elements M, the content of the metal element other than Zr may be, for example, 0.5 to 30 mol%, 1 to 20 mol%, or 5 to 15 mol% with respect to the total amount of the metal element M.

The halogen element contained in the ion conductive substance of the present embodiment may be any of F, Cl, Br, and I, but may contain at least one kind of Cl, Br, and I, may contain at least one of Cl and Br, and may contain Cl. The ion conductive substance may contain only one kind of halogen element, or may contain two or more kinds of halogen elements.

The content of the halogen element in the ion conductive substance may be, for example, 45 to 85 mol%, 50 to 80 mol%, or 55 to 78 mol% with respect to the total amount of atoms contained in the ion conductive substance.

The ion conductive substance may contain two or more kinds of halogen elements. In this case, a combination of halogen elements contained in the ion conductive substance may be a combination of Cl and at least one halogen element selected from the group consisting of F, Br, and I, may be a combination of Cl, Br, and I, may be a combination of Br and I, or may be a combination of Cl and F.

When the halogen element contained in the ion conductive substance contains two or more kinds of halogen elements, a content of a halogen element having a largest content in the ion conductive substance may be, for example, 50 mol% or more, 60 mol% or more, 70 mol% or more, or 80 mol% or more with respect to a total number of atoms of the halogen elements contained in the ion conductive substance. Further, the content of the halogen element having the largest content in the ion conductive substance may be, for example, 50 to 85 mol% or 60 to 80 mol% with respect to the total number of atoms of the halogen elements contained in the ion conductive substance.

Note that the "halogen element having the largest content" means a halogen element having the largest content on a molar basis among the halogen elements contained in the ion conductive substance. The halogen element having the largest content may be Cl or Br, and may be Cl.

A content of a halogen element other than the halogen element having the largest content may be, for example, 50 mol% or less, 40 mol% or less, 30 mol% or less, or 20 mol% or less with respect to the total number of atoms of the halogen elements contained in the ion conductive substance. The content of the halogen element other than the halogen element having the largest content may be, for example, 1 to 40 mol%, 3 to 30 mol%, or 5 to 20 mol% with respect to the total number of atoms of the halogen elements contained in the ion conductive substance.

The content of Cl in the ion conductive substance may be, for example, 50 mol% or more, 60 mol% or more, 70 mol% or more, or 80 mol% or more with respect to the total number of atoms of the halogen elements contained in the ion conductive substance. Further, the content of Cl in the ion conductive substance may be, for example, 50 to 85 mol% or 60 to 80 mol% with respect to the total number of atoms of the halogen elements contained in the ion conductive substance.

When the ion conductive substance contains Cl, a content of a halogen element other than Cl may be, for example, 50 mol% or less, 40 mol% or less, 30 mol% or less, or 20 mol% or less with respect to the total number of atoms of the halogen elements contained in the ion conductive substance. When the ion conductive substance contains Cl, the content of the halogen element other than Cl may be 1 to 40 mol%, 3 to 30 mol%, or 5 to 20 mol% with respect to the total number of atoms of the halogen elements contained in the ion conductive substance. The halogen element other than Cl may be F.

The ion conductive substance of the present embodiment may contain an oxygen element. The content of the oxygen element in the ion conductive substance may be, for example, 0.5 to 10 mol%, 1.5 to 8 mol%, 2 to 7 mol%, 2 to 6 mol%, or 2.5 to 5 mol% with respect to the total amount of atoms contained in the ion conductive substance. The ion conductive substance may not contain an oxygen element, and the content of the oxygen element may be, for example, 10 mol% or less, 8 mol% or less, 7 mol% or less, 6 mol% or less, or 5 mol% or less with respect to the total amount of atoms contained in the ion conductive substance.

The ion conductive substance of the present embodiment may further contain at least one element selected from the group consisting of F, Br, I, and O. More specifically, the ion conductive substance of the present embodiment may contain Cl as the halogen element, and may further contain at least one element selected from the group consisting of F, Br, I, and O.

The ion conductive substance of the present embodiment may contain a dopant element X. The dopant element X may be an element capable of forming a tetrahedral structure $XO_4$ with four oxygens, and specifically, may contain at least one of P and S. The dopant element X may contain P.

The content of the dopant element X in the ion conductive substance may be, for example, 0.05 to 5 mol%, 0.1 to 3 mol%, 0.2 to 2 mol%, or 0.3 to 1.5 mol% with respect to the total amount of atoms contained in the ion conductive substance.

The content of the dopant element X in the ion conductive substance may be 50 mol% or less, 1 to 40 mol%, 5 to 35 mol%, or 10 to 30 mol% of the content of the metal element M. The content of the dopant element X in the ion conductive substance may be 40 mol% or less, 35 mol% or less, 30 mol% or less, or 25 mol% or less of the content of the metal element M.

Activation energy of the ion conductive substance of the present embodiment may be 0.65 eV or less, 0.2 to 0.60 eV, or 0.3 to 0.56 eV.

The activation energy of the ion conductive substance can be determined by measuring ionic conductivity $\sigma$ at five temperatures (25°C, 40°C, 60°C, 80°C, and 100°C) within a temperature range of 25°C to 100°C, and performing curve fitting based on the following calculation formula. Further, a graph (Arrhenius plot) in which the vertical axis represents $\sigma$ and the horizontal axis represents 1000/T (T is absolute temperature) can be created. In the following formula, $\sigma$ represents ionic conductivity (S/cm), T represents absolute temperature (K), A represents a frequency factor, $E_a$ represents activation energy, and $k_b$ represents the Boltzmann constant.

$$\text{Formula: } \sigma T = A\exp(-E_a/k_b T)$$

When the ion conductive substance of the present embodiment contains Li as the alkali metal element, it may have at least one peak having a peak top in a range of -50 to 0.68 ppm, a range of -10 to 0.65 ppm, a range of -1 to 0.60 ppm, or a range of 0 to 0.55 ppm with a chemical shift of a $^6$LiCl salt (solid) defined as 0 ppm when a solid $^6$Li-NMR spectrum is measured at room temperature under a condition of a magic angle spinning of 10 kHz with a resonance frequency of a $^6$Li nucleus being 44.1 MHz. The number of peaks observed in these ranges may be two or less, and may be one.

An ion conductive substance in which such a spectrum is observed in the solid $^6$Li-NMR spectrum tends to be more excellent in reduction resistance. Although the reason is not necessarily clear, there is a possibility that a coordination environment of Li affects the reduction resistance, and in particular, the presence of a peak at the above peak shift position is considered to improve the reduction resistance because a coordination environment of lithium derived from the cubic structure is generated.

In the present specification, measurement conditions for the solid $^6$Li-NMR spectrum are assumed to be those adopted in Examples. The peak top position may be calculated by performing Lorentzian fitting on the obtained spectrum.

The ion conductive substance of the present embodiment may contain a compound represented by the following composition formula (1) (also referred to as an alkali metal-containing halide), and may be a compound represented by the following composition formula (1). A crystal structure of the compound is a cubic crystal.

$$A_\alpha M_\beta X_\gamma D_\kappa Z_\delta E_\eta O_\varepsilon \qquad (1)$$

(In the formula, A is an alkali metal element, M is the above-described tetravalent metal element M, X is the above-described dopant element X, D is the above-described divalent metal element D, Z is a halogen element, and $0.1 \leq \alpha \leq 3$, $0.01 \leq \beta \leq 1.5$, $0 \leq \gamma \leq 0.5$, $3 \leq \delta \leq 6$, $0.01 \leq \kappa \leq 1$, and $0 \leq \varepsilon \leq 2$ are satisfied.)

In the above composition formula (1), $\alpha$ may be, for example, 0.2 to 2.5, 0.3 to 2.3, or 0.5 to 2.2. An upper limit and a lower limit for $\alpha$ can be arbitrarily combined.

In the above composition formula (1), $\beta$ may be, for example, 0.05 to 1.2, 0.1 to 1.1, or 0.2 to 1. An upper limit and a lower limit for $\beta$ can be arbitrarily combined. $\gamma$ may be 0.01 to 0.3, 0.02 to 0.2, and 0.08 to 0.15. An upper limit and a lower limit for $\gamma$ can be arbitrarily combined.

In the above composition formula (1), $\delta$ may be, for example, 3.5 to 6 or 4 to 5.8. An upper limit and a lower limit for $\delta$ can be arbitrarily combined.

In the above composition formula (1), $\varepsilon$ may be, for example, 0.1 to 1.0 or 0.2 to 0.8. An upper limit and a lower limit for $\varepsilon$ can be arbitrarily combined.

In the above composition formula (1), $\kappa$ may be, for example, 0.05 to 1.0, 0.08 to 0.9, or 0.1 to 0.8. An upper limit and a lower limit for $\kappa$ can be arbitrarily combined.

In the above composition formula (1), E is an element other than A, M, X, D, Z, and O, and may be an element added or mixed in addition to essential elements. Examples of E include C, B, N, and the like.

In the above composition formula (1), $\eta$ may be, for example, 0 to 0.1, 0 to 0.01, or 0 to 0.001, and may be substantially 0.

Specific examples of the ion conductive substance according to the present embodiment include compounds having composition formulas such as $Li_2Mg_{0.25}Zr_{0.75}Cl_{5.5}$, $Li_2Mg_{0.5}Zr_{0.5}Cl_5$, $Li_2Mg_{0.25}Zr_{0.75}Cl_5F_{0.5}$, $Li_{1.4}Mg_{0.8}Nb_{0.2}Cl_4$, $Li_{1.8}Mg_{0.8}In_{0.2}Cl_4$, $Li_{1.5}Mg_{0.75}Zr_{0.25}Cl_4$, $LiMg_{0.5}Zr_{0.5}Cl_4$, $Li_{0.5}Mg_{0.25}Zr_{0.75}Cl_4$, $Li_{1.7}Mg_{0.85}Zr_{0.15}Cl_4$, $Li_{1.2}Mg_{0.6}Zr_{0.4}Cl_4$, $Li_{0.8}Mg_{0.4}Zr_{0.6}Cl_4$, $Li_{0.3}Mg_{0.13}Zr_{0.83}Cl_4$, $Li_2Mg_{0.23}Zr_{0.73}Cl_5O_{0.25}$, $Li_2Mg_{0.23}Zr_{0.73}Cl_{4.3}O_{0.3}$, $Li_2Mg_{0.25}In_{0.05}Zr_{0.70}Cl_{5.45}$, $Li_2Mg_{0.25}Bi_{0.05}Zr_{0.70}Cl_{5.45}$, $Li_2Mg_{0.25}In_{0.1}Zr_{0.63}Cl_{3.4}$, $Li_2Mg_{0.25}Nb_{0.05}Zr_{0.7}Cl_{5.55}$, $Li_2Mg_{0.25}Nb_{0.1}Zr_{0.63}Cl_{5.6}$, $Li_{1.7}Mg_{0.83}Hf_{0.15}Cl_4$, $Li_{1.2}Mg_{0.6}Hf_{0.4}Cl_4$, $Li_{0.8}Mg_{0.4}Hf_{0.6}Cl_4$, $Li_{1.85}Mg_{0.85}Y_{0.15}Cl_4$, $Li_{1.55}Mg_{0.85}Nb_{0.15}Cl_4$, and $Li_{1.4}Mg_{0.83}W_{0.15}Cl_4$.

A method for producing the ion conductive substance of the present embodiment is not particularly limited, but includes, for example, a production method including a step of performing ball milling on raw materials.

The raw materials are not particularly limited, and may be compounds containing any of the alkali metal element, the metal element M, the halogen element, and the metal element D. The raw materials may optionally contain an oxygen element, a dopant element X, and the like. Examples of an alkali metal source include alkali metal halides, alkali metal oxides, alkali metal peroxide salts, and the like. Examples of a metal element M source include halides of the metal element M. Examples of a metal element D source include halides of the metal element D. The dopant element X source may be, for example, a compound such as a salt of an $XO_4$ ion and an alkali metal. The raw materials are preferably mixed before performing the ball milling, and may be mixed under an inert atmosphere (for example, Ar atmosphere or the like).

The production method may further include a step of annealing the obtained ion conductive substance after performing the ball milling on the raw materials. A temperature of the annealing may be, for example, 80°C or higher. A time of the annealing may be, for example, 1 to 10 hours or 3 to 6 hours. The annealing may not be performed.

The ion conductive substance of the present embodiment can be used, for example, as a material for electrochemical devices such as capacitors and batteries. Examples of such a material include materials for electrolytes. The electrolyte may be a solid electrolyte. Examples of the battery include batteries that charge and discharge by movement of alkali metal ions between a positive electrode and a negative electrode, such as lithium ion batteries and sodium ion batteries. Further, the ion conductive substance of the present embodiment may be used as an electrode material, and may be contained in a positive electrode or a negative electrode of a battery together with an active material.

Hereinafter, the battery of the present embodiment will be described using a lithium ion battery as an example. The lithium ion battery includes a positive electrode, a negative electrode, and an electrolyte (solid electrolyte) disposed between the positive electrode and the negative electrode. The ion conductive substance of the present embodiment (alkali metal-containing halide (in the case of a lithium ion battery, it is a lithium-containing halide)) may be contained in the electrolyte of the lithium ion battery.

The positive electrode of the lithium ion battery is not particularly limited, and may contain a positive electrode active material, and may contain a conductive additive, a binder, and the like as necessary. The positive electrode may be one in which a layer containing these materials is formed on a current collector.

Examples of the positive electrode active material include lithium-containing composite metal oxides containing lithium (Li) and at least one transition metal selected from the group consisting of V, Cr, Mn, Fe, Co, Ni, and Cu. Examples of such lithium composite metal oxides include $LiCoO_2$, $LiNiO_2$, $LiMn_2O_4$, $Li_2MnO_3$, $LiNi_xMn_yCo_{1-x-y}O_2$ [0 < x + y < 1], $LiNi_xCo_yAl_{1-x-y}O_2$ [0 < x + y < 1], $LiCr_{0.5}Mn_{0.5}O_2$, $LiFePO_4$, $Li_2FeP_2O_7$, $LiMnPO_4$, $LiFeBO_3$, $Li_3V_2(PO_4)_3$, $Li_2CuO_2$, $Li_2FeSiO_4$, and $Li_2MnSiO_4$.

The negative electrode of the lithium ion battery is not particularly limited, and may contain a negative electrode active material, and may contain a conductive additive, a binder, and the like as necessary. Examples of the negative electrode active material include simple substances such as Li, Si, P, Sn, Si-Mn, Si-Co, Si-Ni, In, and Au, and alloys or composites containing these elements, carbon materials such as graphite, and substances in which lithium ions are inserted between layers of the carbon materials.

A material of the current collector is not particularly limited, and may be a simple substance or an alloy of a metal such as Mg, Ti, Fe, Co, Ni, Cu, Zn, Pd, Pt, Ag, Au, Al, In, or Ge.

A shape of the electrolyte (solid electrolyte) disposed between the positive electrode and the negative electrode may be layered. The solid electrolyte layer may have a plurality of layers. For example, a configuration having a sulfide solid electrolyte layer containing a sulfide-based electrolyte in addition to the solid electrolyte layer containing the ion conductive substance of the present embodiment may be adopted. A configuration having a sulfide solid electrolyte layer between the solid electrolyte containing the ion conductive substance of the present embodiment and the negative electrode may be adopted.

The sulfide solid electrolyte is not particularly limited, and examples thereof include $Li_6PS_5Cl$, $Li_2S$-$PS_3$, $Li_{10}GeP_2S_{12}$, $Li_{9.6}P_3S_{12}$, $Li_{9.54}Si_{1.74}P_{1.44}S_{11.7}Cl_{0.3}$, and $Li_3PS_4$.

Examples

(Example 1)

Ball Mill

In an argon atmosphere having a dew point of -70°C or lower (hereinafter, referred to as a dry argon atmosphere), LiCl, $MgCl_2$, and $ZrCl_4$ were weighed so as to have a charging composition in Table 1 to prepare raw materials.
The raw materials were put into a zirconia pot for the following planetary ball mill machine, and 65 g of zirconia balls having a diameter of 4 mm were put therein. A crude composition was obtained by performing a treatment to cause a mechanochemical reaction under conditions of 24 hours and 300 rpm.
Planetary ball mill machine: PM 400 manufactured by Verder Scientific GmbH & Co. KG

Annealing

An ion conductive substance of Example 1 was obtained by heating the crude composition obtained above at 100°C for 5 hours in an argon atmosphere.

(Example 2)

An ion conductive substance was produced in the same manner as in Example 1 except that a blending ratio of the raw materials was changed so as to have the charging composition in Table 1.

(Example 3)

An ion conductive substance was produced in the same manner as in Example 1 except that LiCl, $MgCl_2$, $ZrCl_4$, and LiF were used as raw materials, and the blending ratio of the raw materials was changed so as to have the charging composition in Table 1.

(Example 4)

An ion conductive substance was produced in the same manner as in Example 1 except that LiCl, $MgCl_2$, and $NbCl_5$ were used as raw materials, the blending ratio of the raw materials was changed so as to have the charging composition in Table 1, and annealing was not performed.

(Example 5)

An ion conductive substance was produced in the same manner as in Example 1 except that LiCl, $MgCl_2$, and $InCl_3$ were used as raw materials, the blending ratio of the raw materials was changed so as to have the charging composition in Table 1, and annealing was not performed.

(Examples 6 to 12)

Ion conductive substances were produced in the same manner as in Example 1 except that the blending ratio of the raw materials was changed so as to have the charging composition in Table 1, and annealing was not performed.

(Examples 13 and 14)

Ion conductive substances were produced in the same manner as in Example 1 except that LiCl, $MgCl_2$, $ZrCl_4$, and $Li_2O$ were used as raw materials, the blending ratio of the raw materials was changed so as to have the charging composition in Table 1, and annealing was not performed.

(Examples 15 and 17)

Ion conductive substances were produced in the same manner as in Example 1 except that LiCl, $MgCl_2$, $ZrCl_4$, and $InCl_3$ were used as raw materials to obtain the composition in Table 1, the blending ratio of the raw materials was changed so as to have the charging composition in Table 1, and annealing was not performed.

(Example 16)

An ion conductive substance was produced in the same manner as in Example 1 except that LiCl, MgCl$_2$, ZrCl$_4$, and BiCl$_3$ were used as raw materials to obtain the composition in Table 1, the blending ratio of the raw materials was changed so as to have the charging composition in Table 1, and annealing was not performed.

(Examples 18 and 19)

Ion conductive substances were produced in the same manner as in Example 1 except that LiCl, MgCl$_2$, ZrCl$_4$, and NbCl$_5$ were used as raw materials to obtain the composition in Table 1, the blending ratio of the raw materials was changed so as to have the charging composition in Table 1, and annealing was not performed.

(Examples 20 to 22)

Ion conductive substances were produced in the same manner as in Example 1 except that LiCl, MgCl$_2$, and HfCl$_4$ were used as raw materials to obtain the composition in Table 1, the blending ratio of the raw materials was changed so as to have the charging composition in Table 1, and annealing was not performed.

(Example 23)

An ion conductive substance was produced in the same manner as in Example 1 except that LiCl, MgCl$_2$, and YCl$_3$ were used as raw materials, the blending ratio of the raw materials was changed so as to have the charging composition in Table 1, and annealing was not performed.

(Example 24)

An ion conductive substance was produced in the same manner as in Example 1 except that LiCl, MgCl$_2$, and NbCl$_5$ were used as raw materials, the blending ratio of the raw materials was changed so as to have the charging composition in Table 1, and annealing was not performed.

(Example 25)

An ion conductive substance was produced in the same manner as in Example 1 except that LiCl, MgCl$_2$, and WCl$_6$ were used as raw materials, the blending ratio of the raw materials was changed so as to have the charging composition in Table 1, and annealing was not performed.

(Comparative Example 1)

An ion conductive substance was produced in the same manner as in Example 1 except that LiCl and ZrCl$_4$ were used as raw materials, the blending ratio of the raw materials was changed so as to have the charging composition in Table 1, and annealing was not performed.

(Comparative Example 2)

An ion conductive substance was produced in the same manner as in Example 1 except that the blending ratio of the raw materials was changed so as to have the charging composition in Table 1, and annealing was not performed.

<Powder X-Ray Diffraction>

For the obtained ion conductive substances, diffraction peaks observed by powder X-ray diffraction measurement at 25°C were evaluated. The results are shown in Table 2. The measurement conditions for the powder X-ray diffraction measurement were as follows. A half width of a peak was determined by removing a background signal and performing fitting.

Measuring apparatus: Ultima IV (manufactured by Rigaku Corporation) X-ray generator: CuK$\alpha$ radiation source, voltage 40 kV, current 40 mA X-ray detector: Scintillation counter or semiconductor detector
Measurement range: Diffraction angle $2\theta$ = 5° to 80° Scan speed: 4°/min

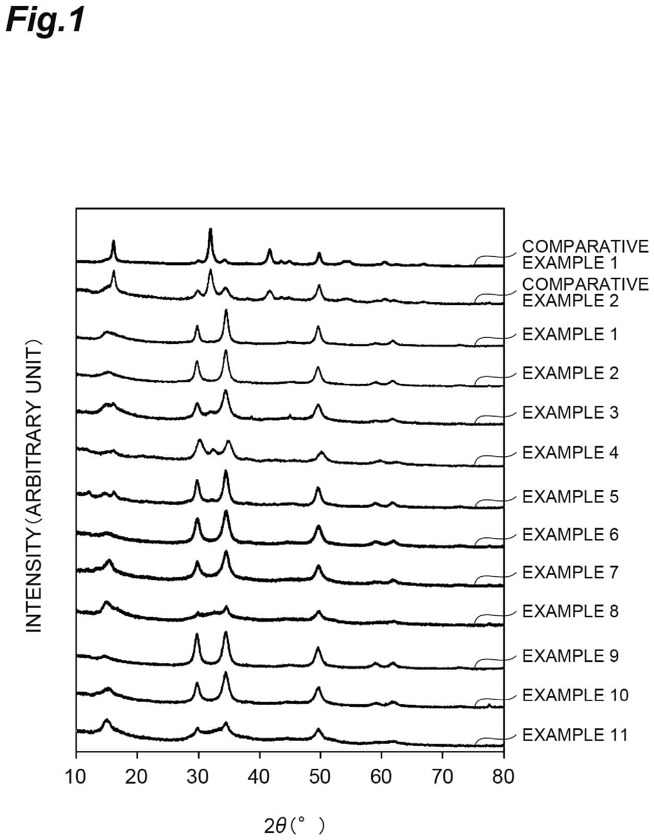

Table 1 shows a crystal structure, a ratio (A/B) of a peak height of a diffraction peak A observed in a range where a 2θ angle is 33 to 38° to a peak height of a diffraction peak B observed in a range where a 20 angle is 45 to 53°, and a half width of the diffraction peak A for each ion conductive substance of Examples and Comparative Examples. FIG. 1 shows X-ray charts of the ion conductive substances of Examples 1 to 11 and Comparative Examples 1 and 2.

<Preparation of Cell for Cyclic Voltammetry>

A cell for cyclic voltammetry was prepared as described below. Note that the preparation of the cell for cyclic voltammetry was performed in a glove box substituted with an inert gas.

First, 150 mg of the ion conductive substance of Example 1 was put into an insulating cylinder having an inner diameter of 10 mm. A pressure of 370 MPa was applied to the ion conductive substance to form a solid electrolyte layer (a layer of the ion conductive substance).

Next, 30 mg of a mixture obtained by weighing 30 parts by weight of acetylene black and 70 parts by weight of the ion conductive substance of Example 1 and mixing them in an agate mortar was laminated on the solid electrolyte layer, and then a pressure of 370 MPa was applied to form a working electrode layer.

Next, 2 mg of a Li foil was disposed on a surface of the solid electrolyte layer opposite to a surface in contact with the working electrode layer so as to be in contact with and cover the solid electrolyte layer to obtain a laminate. A pressure of 50 MPa was applied to the laminate, and a reference electrode layer made of Li was formed on the solid electrolyte layer.

Current collectors formed of stainless steel were attached to the reference electrode and the working electrode, and then lead wires were attached to the current collectors. All members were disposed in a sealed desiccator in the glove box. Thus, the cell for cyclic voltammetry was prepared.

<Cyclic Voltammetry Test>

For the cell for cyclic voltammetry described above, the reference electrode and the working electrode were electrically connected to an impedance analyzer S11260 and a potentiostat S11287A, and a cyclic voltammetry test was performed under the following conditions. That is, in the cyclic voltammetry test, a sweep rate was set to 1 mV/s, and a current value flowing when a potential of the working electrode was changed with respect to the reference electrode ($Li^+/Li$) was measured.

First, the potential of the working electrode with respect to the reference electrode was increased to 5.5 V starting from an open circuit voltage, then reversed, and decreased to 0 V.

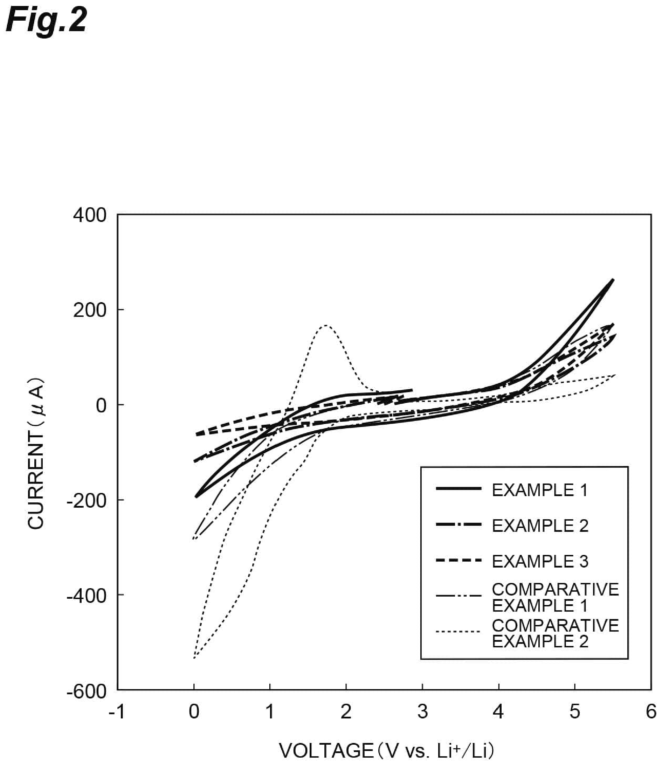

Table 1 shows a potential ($Li^+/Li$ reference) when a current of - 100 μA flowed. FIG. 2 is a diagram illustrating measurement results of cyclic voltammetry for each ion conductive substance of Examples 1 to 3 and Comparative Examples 1 and 2.

<NMR Evaluation>

For each of the obtained ion conductive substances of Example 1, Example 11, and Comparative Example 1, solid $^6$Li-NMR measurement was performed under the following conditions to evaluate a local structural environment of Li.

Apparatus: AVANCE300 (manufactured by Bruker)
Observed nucleus: $^6$Li (resonance frequency of $^6$Li nucleus is 44.1 MHz) Magic angle spinning (MAS) frequency: 10 kHz
Measurement method: Single pulse method (using Bruker standard pulse sequence zg)
Excitation pulse width: $\pi/4$ pulse
Waiting time and number of accumulations: 40 seconds, 256 times
Measurement temperature: Room temperature (26°C)
Reference material: A peak observed for $^6$LiCl salt (solid) is set to 0 ppm.

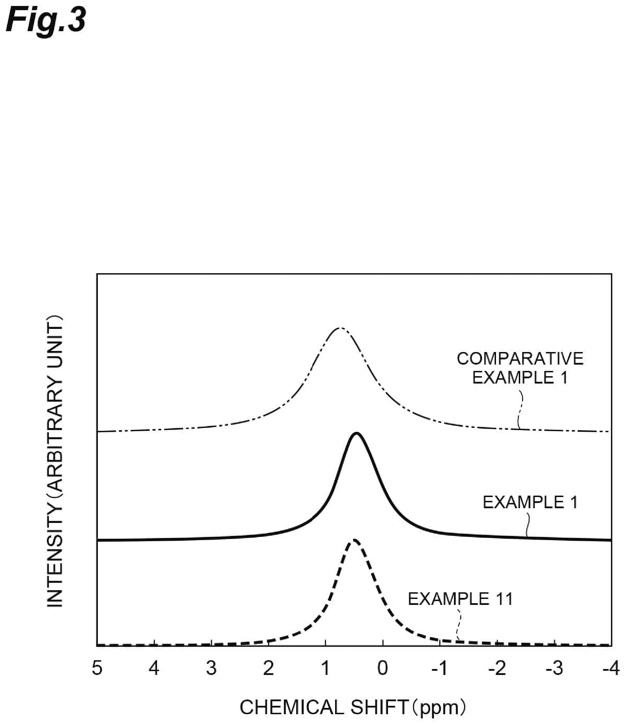

FIG. 3 shows solid $^6$Li-NMR spectra obtained for the ion conductive substances of Example 1, Example 11, and Comparative Example 1. Since one peak was observed in a range of -50 to 50 ppm, Lorentzian fitting was performed to calculate a position of a peak top. The results are shown in Table 2.

<Evaluation of Ionic Conductivity>

A press molding die including a frame mold, a lower punch, and an upper punch was prepared. Note that the frame mold was formed of insulating polycarbonate. Further, both the upper punch and the lower punch were formed of electron-conductive stainless steel, and were electrically connected to terminals of an impedance analyzer (S11260 manufactured by Solartron Analytical), respectively.

Using the press molding die, ionic conductivity of the ion conductive substance was measured by the following method. First, in a dry argon atmosphere, powder of the ion conductive substance was filled onto the lower punch inserted into a hollow portion of the frame mold from vertically below. Then, by pushing the upper punch into the hollow portion of the frame mold from above, a pressure of 370 MPa was applied to the powder of the ion conductive substance inside the press molding die. After the pressure was applied, the punches were tightened and fixed from above and below with a jig, and impedance of the ion conductive substance was measured by an electrochemical impedance measurement method using the impedance analyzer while the constant pressure was maintained.

From impedance measurement results, a graph of a Cole-Cole plot was created. In the Cole-Cole plot, a real value of impedance at a measurement point where an absolute value of a phase of complex impedance was smallest was regarded as a resistance value for ion conduction of the ion conductive substance. Using the resistance value, the ionic conductivity was calculated based on the following mathematical formula (III). The results are shown in Table 2.

$$\sigma = (R_{SE} \times S/t)\text{-}1 \ ... \ (III)$$

Here, $\sigma$ is the ionic conductivity, S is a contact area of the ion conductive substance with the upper punch (equal to a cross-sectional area of the hollow portion of the frame mold),
$R_{SE}$ is the resistance value of the solid electrolyte material in the impedance measurement, and t is a thickness of the ion conductive substance when the pressure is applied.

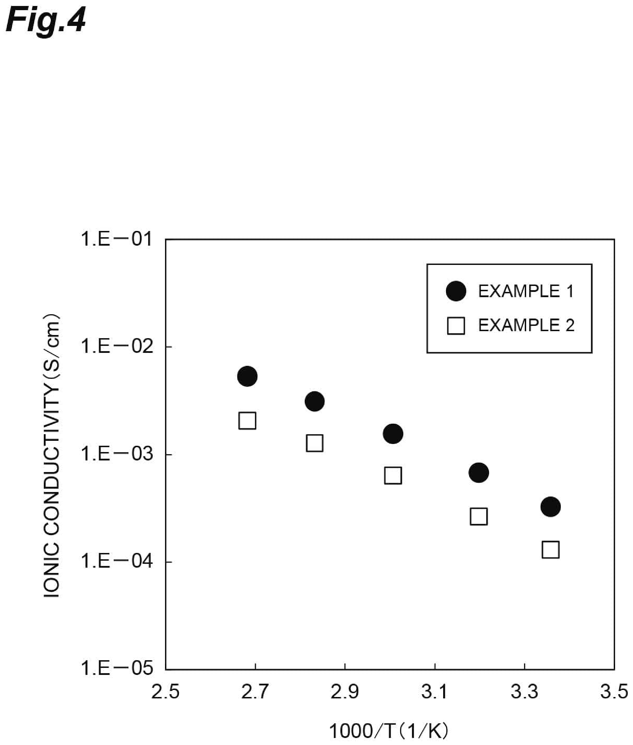

By the above measurement method, measurement was performed at five temperatures (25°C, 40°C, 60°C, 80°C, and 100°C) within a temperature range of 25°C to 100°C for each ion conductive substance of Examples and Comparative Examples, and activation energy was determined from an Arrhenius plot. Table 1 shows the ionic conductivity at 25°C ($\sigma_{25°C}$) and the activation energy (Ea). FIG. 4 is a diagram illustrating Arrhenius plots for the ion conductive substances of Examples 1 and 2.

<Preparation of Secondary Battery>

In a dry argon atmosphere, 29 parts by mass of the ion conductive substance, 67 parts by mass of $LiNi_{1/3}Mn_{1/3}Co_{1/3}O_2$, and 4 parts by mass of acetylene black were weighed respectively, and mixed in a mortar to obtain a positive electrode material.

In an insulating cylinder having an inner diameter of 10 mm, 100 mg of the ion conductive substance of Example 1 and 15 mg of the positive electrode material were laminated in this order to obtain a laminate. A pressure of 370 MPa was applied to the laminate to form a first electrode (a layer of the mixture) and a first solid electrolyte layer (a layer of the ion conductive substance of Example 1, 0.5 mm).

Next, 60 mg of a sulfide solid electrolyte Li6PS5Cl was put so as to be in contact with the first solid electrolyte layer to obtain a laminate. A pressure of 370 MPa was applied to the laminate to form a second solid electrolyte layer (0.3 mm). The first solid electrolyte layer was sandwiched between the first electrode and the second solid electrolyte layer.

Next, 60 mg of an In foil was put so as to be in contact with the second solid electrolyte layer, and 2 mg of a Li foil was further put so as to be in contact with the In foil to obtain a laminate. A pressure of 370 MPa was applied to the laminate to form a second electrode.

Current collectors formed of stainless steel were attached to the first electrode and the second electrode, and then lead wires were attached to the current collectors. All members were disposed in a desiccator, and in a sealed state, a secondary battery of Example 1 was obtained.

<Charge/Discharge Test>

The following product was used as a charge/discharge tester.
Charge/discharge tester: TOSCAT-3100 manufactured by Toyo System Co., Ltd.

At 60°C, a charge/discharge test was performed on the secondary battery at three C rates of 0.1 C (0.19 mA/cm$^2$), 0.5 C (0.95 mA/cm$^2$), and 1 C (1.9 mA/cm$^2$).

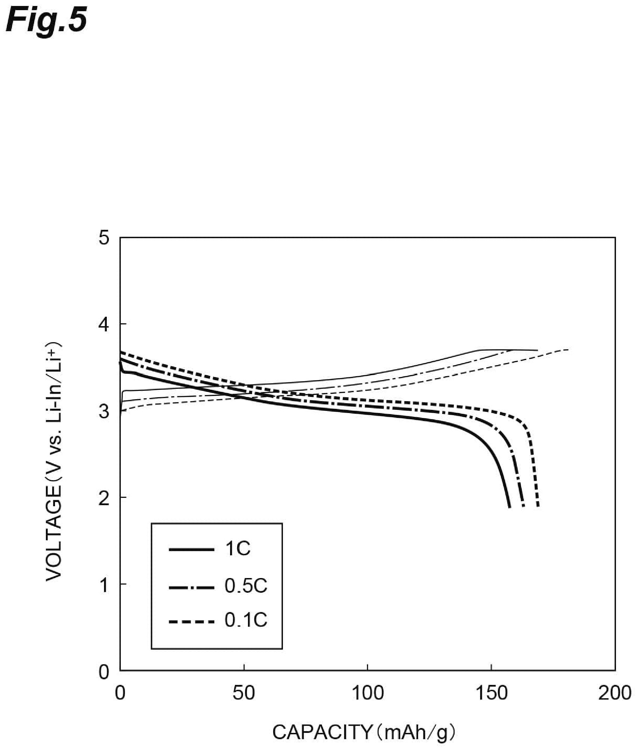

Charging was performed up to 3.7 V at a current density corresponding to each C rate with constant current and constant voltage (CCCV charging). Discharging was performed down to 1.9 V at a current density corresponding to each C rate. FIG. 5 is a diagram illustrating results of the charge/discharge test of the secondary battery of Example 1.

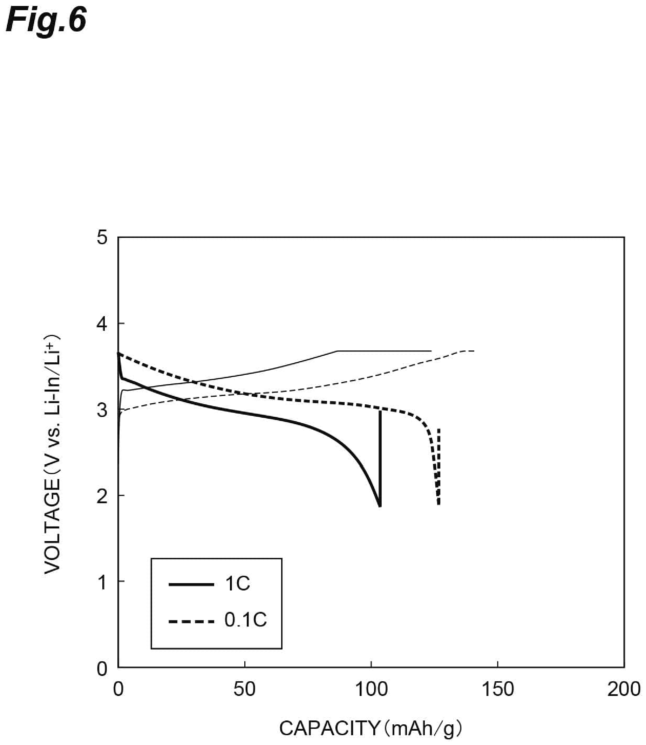

A secondary battery was prepared in the same manner as in Example 1 except that the ion conductive substance of Comparative Example 1 was used as the ion conductive substance, and a charge/discharge test was performed. The C rates were 0.1 C and 1 C. FIG. 6 is a diagram illustrating results of the charge/discharge test of the secondary battery of Comparative Example 1.

<Cycle Test>

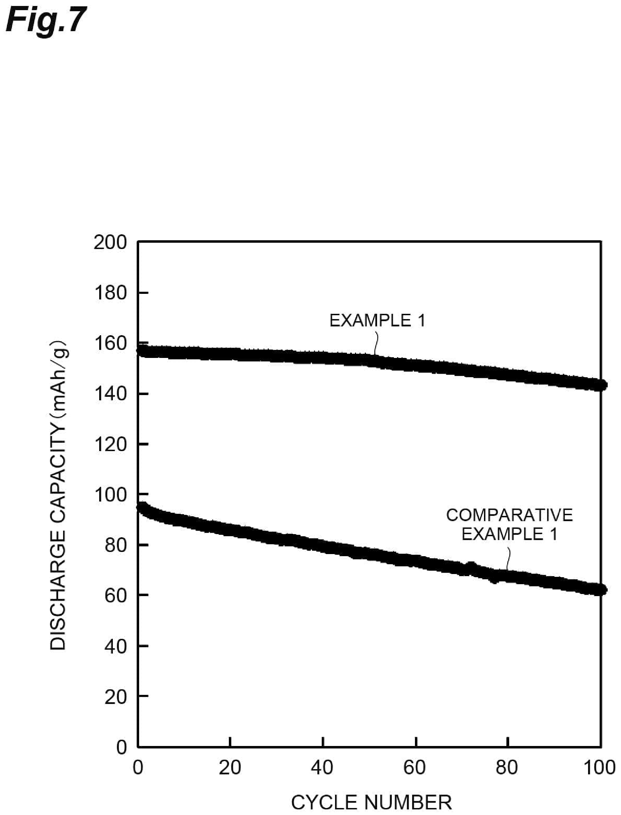

For each of the secondary batteries of Example 1 and Comparative Example 1, 100 charge/discharge cycles were performed at a C rate of 1 C at 60°C, and a discharge capacity in each cycle and the number of cycles were plotted. FIG. 7 is a diagram illustrating results of the cycle test for each of the secondary batteries of Example 1 and Comparative Example 1. A capacity retention ratio after 100 cycles of Example 1 (discharge capacity at the 100th cycle with respect to initial discharge capacity) was 91.1%. A capacity retention ratio after 100 cycles of Comparative Example 1 was 65.6%.

[Table 1]

| Sample | Charging composition | Crystal structure | Half width of A (°) | A/B | Lattice constant (Å) | CV evaluation (V) | $\sigma_{25°C}$ (mS/cm) | Ea (eV) |
|---|---|---|---|---|---|---|---|---|
| Example 1 | $Li_2Mg_{0.25}Zr_{0.75}Cl_{5.5}$ | Cubic | 0.70 | 1.94 | 10.3842(3) | 0.90 | 0.342 | 0.382 |
| Example 2 | $Li_2Mg_{0.3}Zr_{0.3}Cl_5$ | Cubic | 0.95 | 1.93 | 10.4044(2) | 0.40 | 0.131 | 0.387 |
| Example 3 | $Li_2Mg_{0.25}Zr_{0.75}Cl_5F_{0.5}$ | Cubic | 1.26 | 1.76 | 10.3732(3) | * | 0.314 | 0.394 |
| Example 4 | $Li_{1.4}Mg_{0.8}Nb_{0.2}Cl_4$ | Cubic | 0.90 | 1.94 | 10.2763 | * | 0.0025 | 0.55 |
| Example 5 | $Li_{1.8}Mg_{0.8}In_{0.2}Cl_4$ | Cubic | 0.91 | 1.73 | 10.3915 | * | 0.0062 | 0.52 |
| Example 6 | $Li_{1.5}Mg_{0.75}Zr_{0.25}Cl_4$ | Cubic | 1.16 | 1.81 | 10.381 | * | 0.024 | 0.46 |
| Example 7 | $LiMg_{0.3}Zr_{0.3}Cl_4$ | Cubic | 1.13 | 1.78 | 10.4485 | * | 0.045 | 0.42 |
| Example 8 | $Li_{0.5}Mg_{0.25}Zr_{0.75}Cl_4$ | Cubic | 2.01 | 1.26 | 10.3004 | * | 0.016 | 0.47 |
| Example 9 | $Li_{1.7}Mg_{0.85}Zr_{0.13}Cl_4$ | Cubic | 1.08 | 1.75 | 10.3729 | * | 0.010 | 0.49 |
| Example 10 | $Li_{1.2}Mg_{0.6}Zr_{0.4}Cl_4$ | Cubic | 1.18 | 1.79 | 10.3696 | * | 0.048 | 0.42 |
| Example 11 | $Li_{0.8}Mg_{0.4}Zr_{0.6}Cl_4$ | Cubic | 1.63 | 1.34 | 10.3379 | 0.33 | 0.055 | 0.462 |
| Example 12 | $Li_{0.3}Mg_{0.13}Zr_{0.85}Cl_4$ | Cubic | 0.84 | 1.92 | 10.284 | * | 0.035 | 0.462 |
| Example 13 | $Li_2Mg_{0.25}Zr_{0.73}Cl_3O_{0.25}$ | Cubic | 1.03 | 1.9 | 10.3572 | * | 0.266 | 0.370 |
| Example 14 | $Li_2Mg_{0.25}Zr_{0.73}Cl_{4.3}O_{0.5}$ | Cubic | 1.01 | 1.81 | 10.371 | 0.77 | 0.323 | 0.366 |
| Example 15 | $Li_2Mg_{0.25}In_{0.05}Zr_{0.70}Cl_{5.45}$ | Cubic | 0.83 | 2.03 | 10.3611 | * | 0.204 | 0.388 |
| Example 16 | $Li_2Mg_{0.25}Bi_{0.05}Zr_{0.70}Cl_{5.45}$ | Cubic | 0.93 | 2.12 | 10.3288 | 0.44 | - | - |
| Example 17 | $Li_2Mg_{0.25}In_{0.1}Zr_{0.63}Cl_{5.4}$ | Cubic | 0.89 | 1.94 | 10.3841 | * | 0.198 | 0.360 |
| Example 18 | $Li_2Mg_{0.25}Nb_{0.05}Zr_{0.7}Cl_{5.55}$ | Cubic | 0.86 | 2.13 | 10.3299 | 1.10 | - | - |
| Example 19 | $Li_2Mg_{0.25}Nb_{0.1}Zr_{0.63}Cl_{5.6}$ | Cubic | 0.99 | 1.92 | 10.413 | 0.52 | - | - |
| Example 20 | $Li_{1.7}Mg_{0.85}Hf_{0.15}Cl_4$ | Cubic | 1.14 | 1.89 | 10.3848 | * | 0.009 | 0.505 |
| Example 21 | $Li_{1.2}Me_{0.6}Hf_{0.4}Cl_4$ | Cubic | 1.17 | 1.83 | - | * | 0.040 | 0.399 |
| Example 22 | $Li_{0.8}Mg_{0.4}Hf_{0.6}Cl_4$ | Cubic | 4.08 | 1.55 | - | * | - | - |
| Example 23 | $Li_{1.85}Mg_{0.85}Y_{0.13}Cl_4$ | Cubic | 2.72 | 1.59 | 10.332 | * | 0.000 | 0.631 |
| Example 24 | $Li_{1.55}Mg_{0.85}Nb_{0.15}Cl_4$ | Cubic | 2.00 | 1.62 | 10.420 | * | 0.003 | 0.486 |
| Example 25 | $Li_{1.4}Mg_{0.85}W_{0.15}Cl_4$ | Cubic | 2.08 | 1.41 | 10.417 | * | 0.002 | 0.557 |
| Comparative Example 1 | $Li_2ZrCl_6$ | Trigonal | 0.50 | 0.21 | - | 1.22 | - | - |

(continued)

| Sample | Charging composition | Crystal structure | Half width of A (°) | A/B | Lattice constant (Å) | CV evaluation (V) | $\sigma_{25°C}$ (mS/cm) | Ea (eV) |
|---|---|---|---|---|---|---|---|---|
| Comparative Example 2 | $Li_{2.2}Zr_{0.9}Mg_{0.1}Cl_e$ | Trigonal | 1.28 | 0.75 | - | 1.51 | - | - |

*No reduction current having a magnitude of 100 μA or more was observed in a negative direction within a measured range.

[Table 2]

| Sample | Position of peak top [ppm] |
|---|---|
| Example 1 | 0.4 |
| Example 11 | 0.5 |
| Comparative Example 1 | 0.7 |

**Claims**

1. An ion conductive substance comprising an alkali metal element, a divalent metal element D, a trivalent or higher valent metal element M, and a halogen element, having a cubic crystal structure,
   wherein in an X-ray diffraction chart obtained by measurement using a CuKα ray at 25°C, when a diffraction peak having a largest peak height observed in a range where a 2θ angle is 45 to 53° is defined as a diffraction peak B, and a diffraction peak having a largest peak height observed in a range where a 2θ angle is 33 to 38° is defined as a diffraction peak A, a ratio of a peak height of the diffraction peak A to a peak height of the diffraction peak B is 0.80 to 2.50.

2. The ion conductive substance according to claim 1, wherein the halogen element contains Cl.

3. The ion conductive substance according to claim 2, wherein the halogen element further contains at least one element selected from the group consisting of F, Br, I, and O.

4. The ion conductive substance according to claim 1 or 2, wherein the divalent metal element D contains at least one selected from the group consisting of Mg, Ca, Sr, and Ba.

5. The ion conductive substance according to claim 1 or 2, wherein the metal element M contains at least one selected from the group consisting of Zr, Nb, In, Bi, and Hf.

6. The ion conductive substance according to claim 1 or 2,

   wherein a content of the alkali metal element is 5 to 30 mol%,
   a content of the metal element D is 1 to 16 mol%,
   a content of the metal element M is 1 to 18 mol%, and
   a content of the halogen element is 55 to 78 mol%.

7. The ion conductive substance according to claim 1 or 2,
   wherein the alkali metal element contains Li, and the ion conductive substance has at least one peak having a peak top in a range of -50 to 0.68 ppm with a chemical shift of a $^6LiCl$ salt defined as 0 ppm when a solid $^6Li$-NMR spectrum is measured at room temperature under a condition of a magic angle spinning of 10 kHz with a resonance frequency of a $^6Li$ nucleus being 44.1 MHz.

8. A solid electrolyte comprising the ion conductive substance according to claim 1 or 2.

9. A battery comprising the solid electrolyte according to claim 8.

*Fig.1*

# Fig.2

# Fig.3

*Fig.4*

# Fig.5

# Fig.6

# Fig.7

**EP 4 756 842 A1**

## INTERNATIONAL SEARCH REPORT

| International application No. |
|---|
| **PCT/JP2024/028300** |

### A. CLASSIFICATION OF SUBJECT MATTER

*H01B 1/06*(2006.01)i; *C01G 25/00*(2006.01)i; *H01G 11/56*(2013.01)i; *H01M 10/052*(2010.01)i; *H01M 10/0562*(2010.01)i
FI: H01B1/06 A; H01M10/0562; C01G25/00; H01G11/56; H01M10/052

According to International Patent Classification (IPC) or to both national classification and IPC

### B. FIELDS SEARCHED

Minimum documentation searched (classification system followed by classification symbols)

H01B1/06; C01G25/00; H01G11/56; H01M10/052; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2023-520060 A (BASF SE) 15 May 2023 (2023-05-15)<br>paragraphs [0011]-[0198], fig. 1-14 | 1-9 |
| A | WO 2020/194897 A1 (PANASONIC INTELLECTUAL PROPERTY MANAGEMENT CO., LTD.) 01 October 2020 (2020-10-01)<br>entire text, all drawings | 1-9 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 October 2024** | **15 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/028300**

| Patent document cited in search report | | | Publication date (day/month/year) | Patent family member(s) | | | Publication date (day/month/year) |
|---|---|---|---|---|---|---|---|
| JP | 2023-520060 | A | 15 May 2023 | US | 2023/0140434 | A1 | |
| | | | | p. 2, line 20 to p. 42, line 4, fig. 1-14 | | | |
| WO | 2020/194897 | A1 | 01 October 2020 | US | 2021/0408586 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020070957 A
- WO 2021024876 A
- WO 2021024785 A
- WO 2021024783 A